# EUROPÄISCHE PATENTSCHRIFT

(11) **EP 0 668 442 B1**
(45) Veröffentlichungstag und Bekanntmachung des Hinweises auf die Patenterteilung: **04.09.1996**
(21) Anmeldenummer: 95101202.0
(22) Anmeldetag: 30.01.1995
(51) Int. Cl.: F04B 27/10, F16F 15/26

(54) **Axialkolben-Taumelscheiben-Kompressor**
Axial piston-swash plate compressor
Compresseur à pistons axiaux et plateau en biais

(30) Priorität: 17.02.1994 DE 4405034
(43) Veröffentlichungstag der Anmeldung: 23.08.1995
(73) Patentinhaber: AUDI AG, D-85045 Ingolstadt (DE)
(72) Erfinder: Young, David John, D-74229 Oedheim (DE); Seufer, Theo F., D-74206 Bad Wimpfen (DE)

(56) Entgegenhaltungen:
- EP-A- 0 366 349
- DE-A- 4 229 978
- US-A- 3 062 020
- US-A- 4 815 358
- PATENT ABSTRACTS OF JAPAN vol. 011 no. 188 (M-599) ,17.Juni 1987 & JP-A-62 013789 (HITACHI LTD) 22.Januar 1987,
- PATENT ABSTRACTS OF JAPAN vol. 011 no. 188 (M-599),17.Juni 1987 & JP-A-62 013789

## Beschreibung

Die Erfindung betrifft einen Axialkolben-Taumelscheiben-Kompressor entsprechend dem Oberbegriff des Anspruchs 1.

Derartige, im Prinzip in der DE-A 42 29 978 bekannte Taumelscheiben-Kompressoren werden häufig in der Klimaanlage von Personenkraftwagen verwendet, wobei sie von dem Fahrzeugmotor angetrieben werden. Da für die Funktion der Klimaanlage eine konstante Fördermenge unabhängig von der Drehzahl erwünscht ist, wird die Taumelscheibe so verschwenkt, daß in der Regel bei hohen Drehzahlen ein kleiner Hub und bei niedrigen Drehzahlen ein großer Hub erreicht wird. Durch das Verschwenken der Taumelscheibe entsteht eine Unwucht, deren Größe von dem Grad der Verschwenkung abhängt. Bisher wurde die Taumelscheibe und die mit ihr umlaufenden Teile so ausgewuchtet, daß ein Massenausgleich bei kleinen Hüben, d.h. zu hohen Drehzahlen hin, also dann, wo er wegen der quadratischen Drehzahlabhängigkeit vor allem benötigt wird, erreicht wurde. Außerhalb dieses Arbeitsbereichs entsteht eine Unwucht, die bei niedrigen Drehzahlen Vibrationen zur Folge hat.

Darüber hinaus ist aus der US-A 4 815 358 ein Taumelscheiben-Kompressor bekannt, der ein mit der Antriebswelle umlaufendes Gegengewicht aufweist. Dieses Gegengewicht ist gemeinsam mit der Taumelscheibe verschwenkbar, um den Mechanismus statisch auszugleichen. Hierzu liegen die Drehpunkte des Gegengewichts und der Taumelscheibe auf der Antriebswelle, weisen das Gegengewicht und die Taumelscheibe die gleiche Masse auf und haben die Schwerpunkte des Gegengewichts und der Taumelscheibe jeweils die gleiche Entfernung von der Antriebswelle. Solche Taumelscheiben-Kompressoren sind in konstruktiver Hinsicht jedoch sehr aufwendig.

Ausgehend von diesem Stand der Technik ist es Aufgabe der Erfindung, einen weniger aufwendigen Taumelscheiben-Kompressor der gattungsgemäßen Art zu schaffen, bei dem ein weitgehender Massenausgleich über den gesamten Drehzahlbereich erreicht wird. Diese Aufgabe wird erfindungsgemäß durch die Merkmale des Anspruchs 1 gelöst.

Bei dem erfindungsgemäßen Vorschlag wird im unteren Drehzahlbereich durch das erste Gegengewicht (gegebenenfalls zusammen mit einem etwa vorhanden Gegengewicht) ein teilweiser Massenausgleich erreicht, während das zweite Gegengewicht durch die Feder in seiner Ausgangslage gehalten wird. Ab einer bestimmten Drehzahl, beispielsweise ab 1500 bis 2000 U/min, wird das zweite Gegengewicht unter Überwindung der Kraft der Feder durch die Fliehkraft nach außen bewegt, so daß die Wirkung des ersten Gegengewichts zunehmend kompensiert und dann im oberen Drehzahlbereich ein weitgehend vollständiger Massenausgleich erzielt wird.

Vorzugsweise ist mit der Antriebswelle eine Scheibe verbunden, die auf einer Seite der Drehachse mit dem ersten Gegengewicht versehen ist und diesem diametral gegenüberliegend eine radiale Führung für das zweite Gegengewicht aufweist, die mit einem inneren und einem äußeren Anschlag für das zweite Gegengewicht versehen ist, wobei die Feder bestrebt ist, das zweite Gegengewicht in Anlage an dem inneren Anschlag zu halten.

Nach einem anderen Vorschlag der Erfindung ist auf der Antriebswelle eine Scheibe angebracht, die auf der einen Seite der Drehachse mit dem ersten Gegengewicht versehen ist, wobei das zweite Gegengewicht schwenkbar an der Scheibe angebracht ist und mit steigender Drehzahl durch die Fliehkraft entgegen der Kraft der Feder in eine Stellung geschwenkt wird, in der sie die Wirkung des ersten Gegengewichts kompensiert. Das zweite Gegengewicht kann von einem die Antriebswelle umgebenden Ring gebildet sein, der auf einer Seite schwenkbar an der Scheibe angebracht ist. Die Scheibe kann eine ringförmige Ausnehmung aufweisen, in welcher der Ring mit radialem Spiel angeordnet ist, wobei die radial innere Wand der Ausnehmung einen Anschlag für den Ring sowohl im unteren als auch im oberen Drehzahlbereich bildet. Die auf den Ring wirkende Feder kann eine Schenkelfeder sein, die seitlich neben dem Ring angeordnet ist und mit einem Ende am Drehzapfen des Ringes und mit dem anderen Ende am Ring angebracht ist. Die Schenkelfeder kann sich um etwa 540° erstrecken, wobei ihr anderes Ende an einer dem Drehzapfen etwa diametral gegenüberliegenden Stelle mit dem Ring verbunden ist. Die Breite des Ringes ist an seiner dem ersten Gegengewicht diametral gegenüberliegenden Stelle größer als an der dem ersten Gegengewicht benachbarten Stelle. Das erste Gegengewicht kann ebenfalls in der ringförmigen Ausnehmung der Scheibe vorgesehen sein.

Zwei Ausführungsbeispiele der Erfindung werden im folgenden unter Bezugnahme auf die Zeichnungen beschrieben. Es zeigt:
- Fig. 1: einen Teil-Längsschnitt eines Axialkolben-Taumelscheibenkompressors mit einem ersten Ausführungsbeispiel der erfindungsgemäßen Zusatzvorrichtung zur Unwuchtkompensierung,
- Fig. 2: eine Ansicht der Vorrichtung zur Unwuchtkompensierung von Fig. 1, wobei das zweite Gegengewicht in der Stellung im unteren Drehzahlbereich dargestellt ist,
- Fig. 3: eine Ansicht ähnlich Fig. 2, wobei das zweite Gegengewicht in der Stellung im oberen Drehzahlbereich dargestellt ist, und
- Fig. 4: eine schematische Darstellung eines zweiten Ausführungsbeispiels einer Zusatzvorrichtung zur Unwuchtkompensierung.

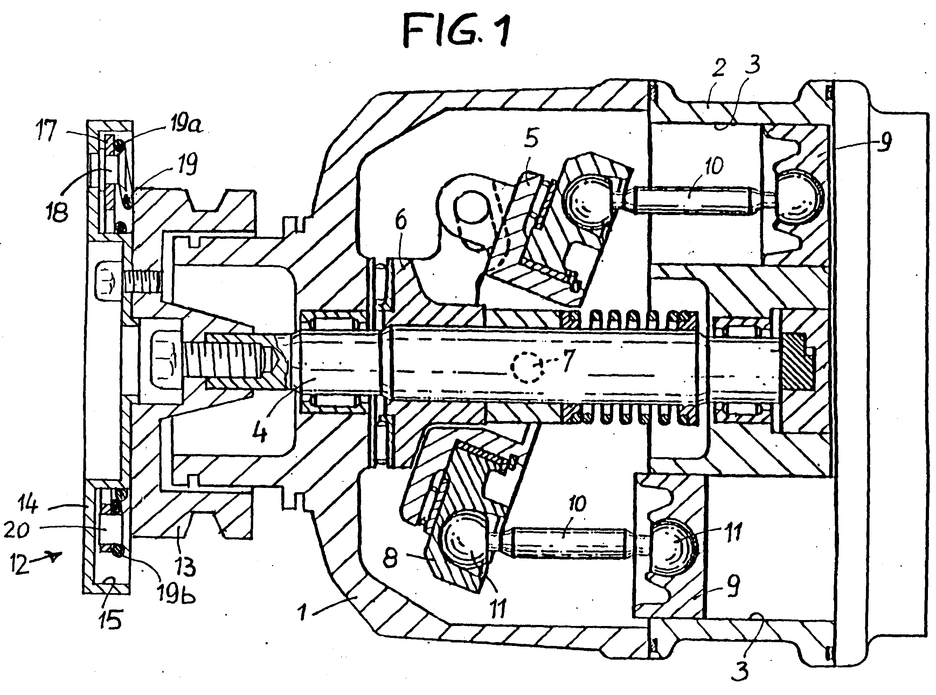

Der in Fig. 1 dargestellte Taumelscheibenkompressor weist ein Gehäuse 1 auf, an das ein Zylinderblock 2 mit einer Mehrzahl von axialen Zylinderbohrungen 3 angeflanscht ist. In dem Gehäuse 1 und in dem Zylinderblock 2 ist eine Antriebswelle 4 gelagert. Innerhalb des Gehäuses 1 ist auf der Antriebswelle 4 eine Taumelscheibe 5 gelagert, die mit einem drehfest auf der Antriebswelle 4 angeordneten Antriebsflansch 6 in Antriebsverbindung steht und durch eine nicht dargestellte Einrichtung oder auch selbsttätig in Abhängigkeit von der Drehzahl und/oder vom Förderdruck um eine Querachse 7 schwenkbar ist. Auf der Taumelscheibe 5 ist ein Ring 8 gelagert, der gegen Drehung im Gehäuse 1 festgelegt ist. In jeder Zylinderbohrung 3 ist ein Kolben 9 verschiebbar angeordnet, dessen Kolbenstange 10 einerseits mit dem Kolben 9 und andererseits mit dem Ring 8 jeweils durch ein Kugelgelenk 11 verbunden ist. Bei Drehung der Antriebswelle 4 wird die Taumelscheibe 5 von dem Antriebsflansch 6 mitgenommen, wobei die Kolben 9 je nach Größe der Schrägstellung der Taumelscheibe eine mehr oder weniger große Hubbewegung ausführen. Durch Veränderung der Schrägstellung der Taumelscheibe 5 kann somit der Hub der Kolben 9 und damit die Fördermenge des Kompressors verändert werden.

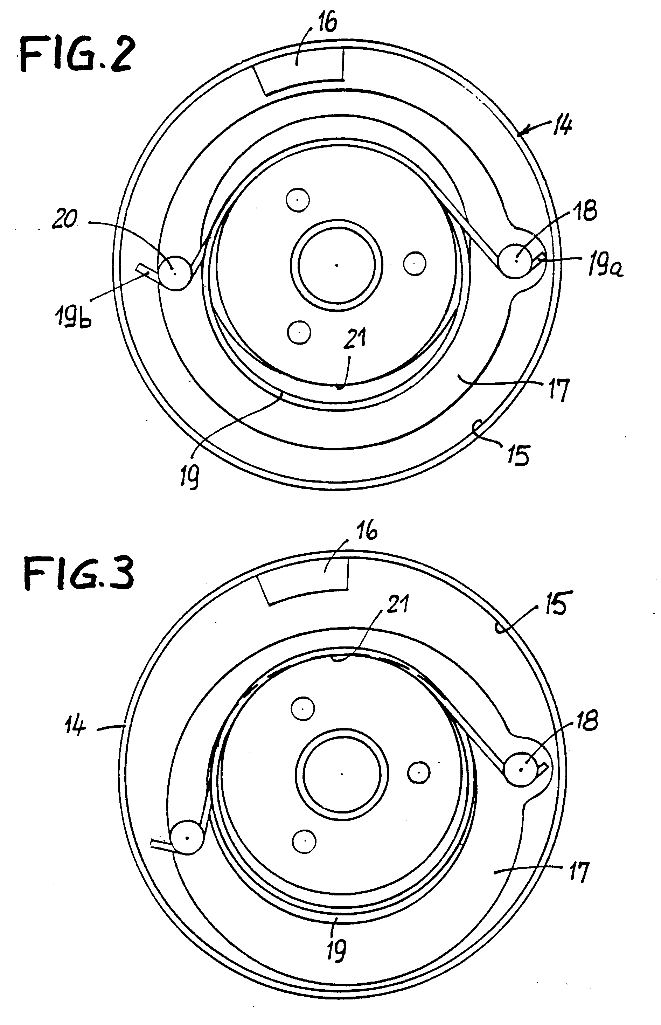

Bei Verwendung eines derartigen Kompressors in der Klimaanlage eines Personenkraftwagens wird der Kompressor von dem Fahrzeugmotor und damit mit stark wechselnder Drehzahl. angetrieben. Da es für die Funktion der Klimaanlage wünschenswert ist, daß die Fördermenge des Klimakompressors weitgehend konstant ist, wird die Schrägstellung der Taumelscheibe durch nicht gezeigte Mittel automatisch so eingestellt, daß in der Regel bei geringen Drehzahlen ein großer Kolbenhub und bei hohen Drehzahlen ein kleiner Kolbenhub verwirklicht wird. Mit der Veränderung der Schrägstellung der Taumelscheibe 5 ändert sich auch die Unwucht der umlaufenden Teile, also der Taumelscheibe 5 und des Antriebsflansches 6. In der Praxis erfolgt ein Massenausgleich dieser gemeinsam umlaufenden Teile für den empfindlichsten Arbeitsbereich, d.h. für hohe Drehzahlen, durch entsprechende Ausbildung der Taumelscheibe 5 und/oder des Antriebsflansches 6. Im unteren Drehzahlbereich besteht somit eine Unwucht, die Vibrationen zur Folge hat. Um im gesamten Drehzahlbereich einen möglichst vollständigen Massenausgleich zu erreichen, ist auf der Antriebswelle 4 bzw. auf einer mit der Antriebswelle verbundenen Riemenscheibe 13 eine Zusatzeinrichtung 12 angeordnet, die mit der Welle 4 drehfest verbunden ist. Die Zusatzeinrichtung 12 weist eine Scheibe 14 mit einer ringförmigen, zur Drehachse der Welle 4 konzentrischen Ausnehmung 15 auf, in der, wie insbesondere aus Fig. 2 und 3 ersichtlich ist, ein erstes mit der Scheibe 14 fest verbundenes Gegengewicht 16 und ein zweites Gegengewicht 17 angeordnet ist, das in diesem Ausführungsbeispiel die Form eines Ringes hat, der in der Ausnehmung 15 mit radialem Spiel angeordnet ist und auf der einen Seite der Drehachse schwenkbar auf einem Drehzapfen 18 gelagert ist. Der Ring 17 steht unter dem Einfluß einer Schenkelfeder 19, deren eines Ende 19a am Drehzapfen 18 und deren anderes Ende 19b an einen dem Drehzapfen 18 etwa diametral gegenüberliegenden Zapfen 20 am Ring 17 eingehakt ist. Diese Feder ist bestrebt, den Ring 17 in die in Fig. 2 gezeigte Stellung zu schwenken, in welcher der Ring 17 auf der dem ersten Gegengewicht 16 gegenüberliegenden Seite an der Innenwand 21 der Ausnehmung 15 anliegt. Das erste Gegengewicht 16 ist so ausgelegt, daß es einen weitgehend vollständigen Massenausgleich im unteren Drehzahlbereich bewirkt. Steigt die Drehzahl an, so wird ab einer bestimmten Drehzahl, beispielsweise 1500 bis 2000 U/min, der Ring 17 entgegen der Wirkung der Feder 19 um den Drehzapfen 18 durch die Fliehkraft nach außen verschwenkt und er kompensiert dabei zunehmend die Wirkung des ersten Gegengewichts 16. Bei einer bestimmten Drehzahl liegt der Ring 17 dann an einer dem ersten Gegengewicht 16 benachbarten Stelle an der Innenwand 21 der Ausnehmung 15 an, wie dies in Fig. 3 dargestellt ist. In dieser Stellung des Ringes 17 wird ein weitgehend vollständiger Massenausgleich der umlaufenden, aus der Taumelscheibe 5 und Antriebsflansch 6 bestehenden Einheit erreicht. Selbstverständlich muß der Ring 17 entsprechend ausgebildet sein, was im Ausführungsbeispiel dadurch bewirkt wird, daß seine Breite in dem den ersten Gegengewicht 16 diametral gegenüberliegenden Bereich größer ist als in dem dem Gegengewicht benachbarten Bereich. Um Kippmomente zu vermeiden, liegen die Schwerpunkte des Ringes 17 und des ersten Gegengewichts 16 in einer Ebene.

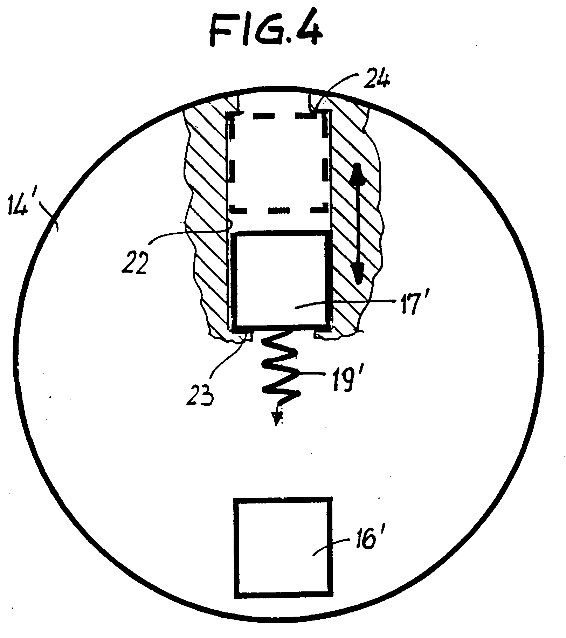

In Fig. 4 ist schematisch ein zweites Ausführungsbeispiel der erfindungsgemäßen Zusatzeinrichtung dargestellt, die wiederum eine mit der Antriebswelle umlaufende Scheibe 14' aufweist, welche ein erstes, an der Scheibe 14' befestigtes Gegengewicht 16' und diesem diametral gegenüberliegend eine radiale Führung 22 für ein zweites Gegengewicht 17' aufweist, das im unteren Drehzahlbereich durch eine Feder 19' in Anlage an einem inneren Anschlag 23 gehalten ist und mit zunehmender Drehzahl entgegen der Wirkung der Feder 19' durch die Fliehkraft nach außen bewegt wird, bis es an dem äußeren Anschlag 24 anliegt, wie dies gestrichelt eingezeichnet ist. Die Wirkung dieser Zusatzeinrichtung ist prinzipiell die gleiche wie diejenige des ersten Ausführungsbeispiels gemäß Fig. 1 bis 3.

Abweichend von den dargestellten Ausführungsbeispielen kann das erste Gegengewicht Bestandteil der miteinander umlaufenden Teile 5 und 6 sein.

## Patentansprüche

1. Axialkolben-Taumelscheiben-Kompressor mit variablem Hub und weitgehend drehzahlunabhängiger Förderleistung, der einen stationären Zylinderblock mit einer Mehrzahl von achsparallelen Zylinderbohrungen aufweist, in denen Kolben verschiebbar sind, deren Kolbenstangen mit ihren Enden gelenkig in einem Ring gelagert sind, der drehbar auf einer Taumelscheibe angeordnet ist, die mit einer zum Zylinderblock koaxialen Antriebswelle drehfest, jedoch zur Veränderung des Kolbenhubes um eine Querachse schwenkbar verbunden ist, und der ein erstes mit der Antriebswelle umlaufendes Gegengewicht aufweist, **dadurch gekennzeichnet**, daß das erste Gegengewicht (16, 16') zum Massenausgleich im unteren Drehzahlbereich bei großem Hub dient, und ein zweites mit der Antriebswelle (4) umlaufendes Gegengewicht (17, 17') entgegen der Wirkung einer Feder (19, 19') durch die Fliehkraft drehzahlabhängig relativ zum ersten Gegengewicht verschiebbar ist und mit steigender Drehzahl die Wirkung des ersten Gegengewichts zunehmend kompensiert.

2. Taumelscheiben-Kompressor nach Anspruch 1, dadurch gekennzeichnet, daß mit der Antriebswelle (4) eine Scheibe (14') verbunden ist, die auf einer Seite der Drehachse mit dem ersten Gegengewicht (16') versehen ist und diesem diametral gegenüberliegend eine radiale Führung (22) für das zweite Gegengewicht (17') aufweist, die mit einem inneren und einem äußeren Anschlag (23 bzw. 24) für das zweite Gegengewicht versehen ist, und daß eine Feder (19') vorgesehen ist, die bestrebt ist, das zweite Gegengewicht in Anlage an dem inneren Anschlag (23) zu halten.

3. Taumelscheiben-Kompressor nach Anspruch 1, dadurch gekennzeichnet, daß auf der Antriebswelle (4) eine Scheibe (14) angebracht ist, die auf einer Seite der Drehachse mit dem ersten Gegengewicht (16) versehen ist, und daß das zweite Gegengewicht (17) schwenkbar an der Scheibe angebracht ist und mit steigender Drehzahl entgegen der Kraft einer Feder (19) in eine Stellung schwenkbar ist, in der sie die Wirkung des ersten Gegengewichts kompensiert.

4. Taumelscheiben-Kompressor nach Anspruch 3, dadurch gekennzeichent, daß das zweite Gegengewicht von einem die Antriebsachse (4) umgebenden Ring (17) gebildet ist, der auf einer Seite schwenkbar an der Scheibe (14) angebracht ist.

5. Taumelscheiben-Kompressor nach Anspruch 4, dadurch gekennzeichnet, daß die Scheibe (14) eine ringförmige Ausnehmung (15) aufweist, in welcher der Ring (17) mit radialem Spiel angeordnet ist, und daß die radial innere Wand (21) der Ausnehmung (15) einen Anschlag für den Ring (17) sowohl im oberen als auch im unteren Drehzahlbereich bildet.

6. Taumelscheiben-Kompressor nach Anspruch 4 oder 5, dadurch gekennzeichnet, daß die auf den Ring (17) wirkende Feder (19) eine Schenkelfeder ist, die seitlich neben dem Ring (17) angeordnet ist und mit einem Ende (19a) am Drehzapfen (18) des Ringes (17) und mit dem anderen Ende (19b) an dem Ring (17) angebracht ist.

7. Taumelscheiben-Kompressor nach Anspruch 6, dadurch gekennzeichnet, daß die Schenkelfeder (19) die Antriebswelle (4) um etwa 540° umgibt und ihr anderes Ende (19b) an einer dem Drehzapfen (18) etwa diametral gegenüberliegenden Stelle (20) mit dem Ring (17) verbunden ist.

8. Taumelscheiben-Kompressor nach Anspruch 4, dadurch gekennzeichnet, daß die Breite des Ringes (17) in seine dem ersten Gegengewicht (16) diametral gegenüberliegenden Bereich größer ist als in dem dem ersten Gegengewicht benachbarten Bereich.

9. Taumelscheiben-Kompressor nach Anspruch 5, dadurch gekennzeichnet, daß auch das erste Gegengewicht (16) in der ringförmigen Ausnehmung (15) der Scheibe (14) angeordnet ist und mit dem Ring (17) in einer Ebene liegt.

10. Taumelscheibenkompressor nach einem der Ansprüche 1 bis 9, dadurch gekennzeichnet, daß das erste Gegengewicht (16, 16') integrierter Bestandteil der Taumelscheibe (5) oder eines mit dieser in Antriebsverbindung stehenden, drehfest mit der Antriebswelle (4) verbundenen Antriebsflansches (6) ist.

## Claims

1. Axial-piston swash-plate compressor having a variable stroke and an output that is largely independent of engine speed, and featuring a stationary cylinder block with a plurality of cylinder bores aligned parallel to the axis, in which pistons are adapted to move whose connecting rods are flexibly mounted by their ends in a ring arranged so as to rotate on a swash plate joined to a drive shaft coaxial to the cylinder block in a manner preventing it from rotating but allowing it to swivel about a transverse axis so as to alter the piston stroke, and also featuring a first counterweight which revolves with the drive shaft, characterised in that the first counterweight (16, 16') is used to balance the masses in the lower engine speed range when the stroke is large, and a second counterweight (17, 17') which revolves with the drive shaft (4) is adapted to move, as a result of the centrifugal force, relative to the first counterweight in a manner dependent on the engine speed, against the action of a spring (19, 19'), and as the engine speed rises it increasingly compensates the action of the first counterweight.

2. Swash-plate compressor according to claim 1, characterised in that joined to the drive shaft (4) is a plate (14') which is fitted with the first counterweight (16') to one side of the axis of rotation and diametrically opposed thereto features a radial guide (22) for the second counterweight (17'), being provided with an inner and an outer stop (23 and 24 respectively) for the second counterweight, and that a spring (19') is provided which is trying to hold the second counterweight in contact against the inner stop (23).

3. Swash-plate compressor according to claim 1, characterised in that fitted on the drive shaft (4) is a plate (14) which to one side of the axis of rotation is provided with the first counterweight (16), and that the second counterweight (17) is fitted so as to swivel on the plate and, as the engine speed rises, to swivel against the force of a spring (19) into a position in which it compensates the action of the first counterweight.

4. Swash-plate compressor according to claim 3, characterised in that the second counterweight is constituted by a ring (17) which is wrapped around the drive axis (4) and is fitted to the plate (14) so as to swivel on one side.

5. Swash-plate compressor according to claim 4, characterised in that the plate (14) features a ring-shaped recess (15) in which the ring (17) is arranged with radial freeplay, and that the radially inside wall (21) of the recess (15) constitutes a stop for the ring (17) both in the upper and in the lower engine speed range.

6. Swash-plate compressor according to claim 4 or 5, characterised in that the spring (19) acting on the ring (17) is a leg spring which is arranged laterally alongside the ring (17) and is fitted by one end (19a) to the pivot pin (18) of the ring (17) and by the other end (19b) to the ring (17).

7. Swash-plate compressor according to claim 6, characterised in that the leg spring (19) wraps around the drive shaft (4) by approximately 540° and its other end (19b) is joined to the ring (17) at a point (20) approximately diametrically opposed to the pivot pin (18).

8. Swash-plate compressor according to claim 4, characterised in that the width of the ring (17) is greater in the region diametrically opposed to the first counterweight (16) than in the region adjoining the first counterweight.

9. Swash-plate compressor according to claim 5, characterised in that the first counterweight (16) is also arranged in the ring-shaped recess (15) in the plate (14) and is situated in a plane with the ring (17).

10. Swash-plate compressor according to any of claims 1 to 9, characterised in that the first counterweight (16, 16') is an integral part of the swash plate (5) or of a drive flange (6) forming a driving link therewith and joined to the drive shaft (4) in a manner locked against rotation.

## Revendications

1. Compresseur à plateau oscillant et pistons axiaux, à course variable et débit largement indépendant de la vitesse de rotation, qui comporte un bloc-cylindres fixe ayant plusieurs alésages parallèles à l'axe, dans lesquels sont mobiles des pistons dont les tiges sont articulées par leurs extrémités dans une couronne qui est montée à rotation sur un plateau oscillant, lequel est raccordé à un arbre d'entraînement coaxial au bloc-cylindres, sans possibilité de rotation par rapport à cet arbre, mais de manière à pouvoir pivoter autour d'un axe transversal pour modifier la course des pistons, et qui comporte un premier contrepoids tournant avec l'arbre d'entraînement, caractérisé en ce que le premier contrepoids (16,16') sert à l'équilibrage des forces inertielles dans la plage inférieure de vitesse de rotation en cas de grande course, et en ce qu'un second contrepoids (17,17') tournant avec l'arbre d'entraînement (4) est déplaçable par rapport au premier contrepoids, contre l'action d'un ressort (19,19'), en fonction de la vitesse de rotation sous l'effet de la force centrifuge et compense l'effet du premier contrepoids de façon croissante avec l'augmentation de la vitesse de rotation.

2. Compresseur à plateau oscillant selon la revendication 1, caractérisé en ce qu'il est raccordé, à l'arbre d'entraînement (4), un plateau (14') qui est muni du premier contrepoids (l6') d'un côté de l'axe de rotation et qui présente, en position diamétralement opposée à celui-ci, un guide radial (22) pour le second contrepoids (17'), guide qui est muni d'une butée interne (23) et d'une butée externe (24) pour le second contrepoids, et en ce qu'il est prévu un ressort (19') qui a tendance à maintenir le second contrepoids au contact de la butée interne (23).

3. Compresseur à plateau oscillant selon la revendication 1, caractérisé en ce qu'il est monté, sur l'arbre d'entraînement (4), un plateau (14) qui est muni du premier contrepoids (16) d'un côté de l'axe de rotation, et en ce que le second contrepoids (17) est monté pivotant sur le plateau et peut pivoter, lorsque la vitesse de rotation croît, contre l'action d'un ressort (19), dans une position dans laquelle il compense l'effet du premier contrepoids.

4. Compresseur à plateau oscillant selon la revendication 3, caractérisé en ce que le second contrepoids est constitué par une couronne (17) qui entoure l'arbre de rotation (4) et qui, sur un côté, est montée sur le plateau (14) de façon à pouvoir pivoter.

5. Compresseur à plateau oscillant selon la revendication 4, caractérisé en ce que le plateau (14) présente un creux annulaire (15) dans lequel la couronne (17) est disposée avec du jeu radial, et en ce que la paroi (21), interne en direction radiale, du creux (15) constitue une butée pour la couronne (17), aussi bien dans la plage supérieure que dans la plage inférieure de vitesse de rotation.

6. Compresseur à plateau oscillant selon la revendication 4 ou 5, caractérisé en ce que le ressort (19) qui agit sur la couronne (17) est un ressort à branches qui est disposé latéralement à côté de la couronne (17) et qui est monté par une extrémité (19a) sur le pivot (18) de la couronne (17) et, par l'autre extrémité (19b), sur la couronne (17).

7. Compresseur à plateau oscillant selon la revendication 6, caractérisé en ce que le ressort à branches (19) entoure l'arbre d'entraînement (4) sur 540° environ et son autre extrémité (19b) est raccordée à la couronne (17) en un point (20) qui est à peu près diamétralement opposé au pivot (18)

8. Compresseur à plateau oscillant selon la revendication 4, caractérisé en ce que la largeur de la couronne (17) dans sa région diamétralement opposée au premier contrepoids (16) est plus grande que dans sa région voisine du premier contrepoids.

9. Compresseur à plateau oscillant selon la revendication 5, caractérisé en ce que le premier contrepoids (16) est également disposé dans le creux annulaire (15) du plateau (14) et est situé dans le même plan que la couronne (17).

10. Compresseur à plateau oscillant selon l'une quelconque des revendications 1 à 9, caractérisé en ce que le premier contrepoids (16,16') fait partie intégrante du plateau oscillant (5) ou d'une collerette d'entraînement (6) qui est en rapport d'entraînement avec celui-ci et est raccordée à l'arbre d'entraînement (4) sans possibilité de rotation par rapport à cet arbre.
